# EUROPEAN PATENT SPECIFICATION

(11) **EP 2 490 520 B1**
(45) Date of publication and mention of the grant of the patent: **03.04.2019**
(21) Application number: 10768620.6
(22) Date of filing: 19.10.2010
(51) Int. Cl.: A01G 9/24

(54) **DEVICE FOR CLIMATE CONTROL OF GREENHOUSES**
EINRICHTUNG ZUR KLIMAREGULIERUNG EINES GEWÄCHSHAUSES
DISPOSITIF DE CLIMATISATION DESTINÉ À UNE SERRE

(30) Priority: 19.10.2009 NL 2003671
(43) Date of publication of application: 29.08.2012
(73) Proprietor: Level Holding B.V., 5691 GD Son (NL)
(72) Inventor: VELTKAMP, Wessel Bart, 5691 GD Son (NL)
(74) Representative: Patentwerk B.V.
(86) International application number: PCT/NL2010/050691
(87) International publication number: WO 2011/049440

(56) References cited:
- WO-A1-00/76296
- WO-A1-03/085327
- DE-A1- 4 243 429
- FR-A- 1 472 154
- US-A1- 2004 194 371

## Description

In covered horticulture there is an increasing need to control all parameters which influence the growth and the quality of the crops. At the same time, there is an imperative necessity to do this with the lowest possible energy consumption, CO₂ production and application of crop-protection products. The moisture management in the greenhouse plays an important part here, on the one hand because the moisture deficit (difference in absolute humidity and fully saturated humidity in grams of moisture per m³ of dry air) determines the absorption of nutrients and the health of the plant, on the other because evaporation (or condensation) consumes a relatively large amount of energy.
In order to enable control of the temperature in the greenhouse use is also made, besides heating means in the heating season, of a device for controlling the climate in a greenhouse, comprising a first heat exchanger with a first series of channels and a second series of channels, wherein the channels are adapted to mutually transfer thermal energy from fluids present in the channels, greenhouse supply means leading from the greenhouse to the first channels, outside supply means leading from outside to the second channels, greenhouse discharge means leading from the device to the greenhouse and discharge means leading from the device to the outside.
In this known device the heat of the air leaving the greenhouse is transferred to the air flowing into the greenhouse. This is of course also the case in the reverse situation, in which the temperature in the greenhouse is lower than the temperature outside the greenhouse. Air is here however carried outside from the greenhouse, whereby CO₂ from the greenhouse is lost. Fresh air is also supplied to the greenhouse from outside, which results in the danger of contamination with pathogens from outside.

As elucidated above, it is important that the air present in the greenhouse remains in the greenhouse in order to retain for the crop plant the carbon dioxide present in and added to the greenhouse. It is also important that the least possible air is carried into the greenhouse from outside in order to keep the danger of contamination and infection as small as possible.

For this purpose WO-A-03/085327 discloses a device for controlling the climate in a greenhouse, the device being adapted to take up a heating position in which the temperature of the greenhouse is increased or maintained, the device comprising a first recuperator with a first series of channels and a second series of channels, a second recuperator, at least active in the heating position, with a third series of channels and a fourth series of channels, wherein the channels are adapted to mutually transfer thermal energy from fluids present in the channels, greenhouse supply means leading from the greenhouse to the first series of channels, outside supply means leading from the outside to the second series of channels, greenhouse discharge means leading from the device to the greenhouse and outside discharge means leading from the device to the outside, wherein the greenhouse discharge means connect to the first series of channels and the outside discharge means connect to the second series of channels
Using these measures the air present in the greenhouse is retained without supply of new air, while the temperature of the air in the greenhouse can be adjusted while maintaining a separation between greenhouse air and outside air. Further this prior art device is designed to maintain, within determined limits of the temperature, a desired temperature and moisture deficit or dryness, wherein the energy consumption is minimal and the greenhouse can remain closed, whereby no loss of CO₂ occurs and diseases and vermin do not enter. There is a complete separation between the greenhouse air and the outside air so that the added CO₂ is not lost. The quantity and the quality of the product are increased by the constant spring climate, while the time at which production takes place can be moved as desired.

This prior art device provides an adequate solution in colder climates in which the temperature in the greenhouse must be retained or increased, but less so for climates in which cooling is required at times. The aim of the invention is to provide a device of the kind referred to above allowing to select a cooling and heating position.

The present invention provides a device of the kind referred to above which can take up a cooling position, in which the temperature of the greenhouse is reduced, wherein in the heating position the third series of channels of the second recuperator is connected between the greenhouse supply means and the first series of channels of the first recuperator and the fourth series of channels of the second recuperator is connected between the first series of channels of the first recuperator and the greenhouse discharge means, and in the cooling position fluid passes through only the fourth series of channels of the second recuperator and the third series of channels of the second recuperator is bypassed.

Outside air is used during heating operation to cool the greenhouse air, after adiabatic cooling thereof, to well below the condensation point via two air-air heat exchangers, after which the sensible and condensation heat is reused again to heat the greenhouse air to almost the original temperature, but with a much lower humidity. During cooling operation this adiabatically cooled outside air is used to cool and to dehumidify or dry the greenhouse air via the air-air heat exchangers, after which the greenhouse air is humidified to oversaturation and further cools adiabatically after mixing with air in the greenhouse, wherein the moisture deficit is held constant.

The device according to the invention is preferably dimensioned as a module with a maximum airflow rate of -250 m³h⁻¹ in the heating position and -400 m³h⁻¹ in the cooling position. The heat loss in the heating position is in the order of several percent relative to the heat loss when the windows are opened. The cooling capacity increases with increasing temperature difference between greenhouse and dew point of the outside air, up to 15 kW at ΔT = 25K. For most crops the greenhouse can remain closed at all times when one module is applied per 40 m².

The modules, each with their own control, can be applied distributed through the greenhouse or can be collected and coupled on one side of the greenhouse, after which the air distribution takes place via for instance air feeds, depending on the infrastructure in the greenhouse. The temperature and humidity can be controlled in accurate manner in that the setting points of the modules incorporated in a network can be adjusted individually. The vertical gradients can also be reduced by vertical forcing of the airflows of the modules using a hose or channel.

The thermodynamic effects of a device not according to the invention are optimized when in the cooling position the third series and fourth series of channels of the second heat exchanger are connected in parallel to respectively the first series and the second series of channels of the first heat exchanger.

The configuration can be simplified still further when a three-way valve is received in the connection between the first series of channels of the first recuperator and the fourth series of channels of the second recuperator, or in the connection between the fourth series of channels of the second recuperator and the greenhouse discharge means. The three-way valve is intended to produce a smooth transition between the heating position and the cooling position. This provision prevents oscillation of the control.

The heat exchanger is preferably formed by a recuperator which is adapted to periodically, repeatedly and simultaneously interchange the connections between the supply means and the first and second series of channels and the connections between the discharge means and the first and second series of channels. In addition to the usual sensible heat, the latent (condensation) heat is hereby also transferred so that the overall heat transfer is more than doubled. This so-called enthalpy recuperator provides for a higher dehumidifying and cooling capacity. It is otherwise also possible to apply a membrane-enthalpy-recuperator.

The construction of the device is further simplified when the heat exchangers are each placed in a rectangular inner casing, openings which can be closed by valves are arranged in the inner casing and the inner casing is placed in an outer casing, the walls of which, on sides where the openings are made in the inner casing, extend further outward than the walls of the inner casing. It hereby becomes structurally further advantageous for the openings to be arranged in mutually opposite surfaces of the inner casing.

Since the parallel use of the recuperators in a cooling position not according to the invention and the use of the heating position with the same channels and plates requires a large number of plates, a good sealing of the plates is a prerequisite. This can be achieved by having the plates move parallel to the plate seat and only causing the plates to move in the direction of the plate seat in the final stage of the closing path, wherein a soft sealing ring on the plate provides for a good seal. In order to implement these measures within a limited space it is recommended that the valves be provided with a closing plate movable substantially parallel to the closing plane.
This measure is implemented attractively in structural manner when the valves are provided with four guides which are each movable pairwise in a groove arranged in a frame and extending substantially parallel to the direction of movement, when the grooves are provided with a part extending with a component parallel to the direction of movement of the plate and with a component extending toward the seal. Driving of the plates is simplified when the valves are adapted for operation by a rod mechanism movable parallel to the closing plane. The movement of the closing plate can hereby be largely clear of the plate seat, so that this movement takes place with the least possible friction, and result in a good sealing of the plate relative to the plate seat.

The driving is simplified still further when it is provided with at least one shared drive device for the valves placed on one side of the device, which is coupled by means of a rod mechanism to the plates associated with the driven valves. The plate motors drive a spindle which is self-locking so that pressure remains on the seal in the closed position. For this purpose the motor is only switched off when the maximum current has almost been reached.
The present invention will be elucidated hereinbelow with reference to the accompanying figures, in which:
Figure 1 shows a diagram of the device according to the invention in the heating position;
Figure 2 is a diagram of the device shown in figure 1 in a cooling position not according to the invention;
Figure 3 shows an enthalpy diagram of the process taking place in the device in the heating position;
Figure 4 shows an enthalpy diagram of the process taking place in the device in the cooling position;
Figure 5 is a diagram of the device shown in figure 1 in a first alternative cooling position not according to the invention with recuperators connected in parallel;
Figure 6 is a diagram of the device shown in figure 1 in a second alternative cooling position not according to the invention, with the first recuperator bypassed;
Figure 7 shows a diagram of a device not according to the invention in respectively the cooling and heating position, wherein the two recuperators are connected in parallel in the cooling position;
Figure 8 is a schematic perspective representation of a combination of two enthalpy recuperators according to a structural embodiment of the invention;
Figure 9 is a perspective schematic view of a plate system as part of the embodiment shown in figure 8;
Figure 10 is an isometric view of the inner casing of the embodiment shown in figures 8 and 9;
Figure 11 is a view corresponding to figure 10, in which the outer casing is shown with contour lines and fans are added;
Figure 12 is a view corresponding to figure 11 with end plates;
Figure 13 shows a diagram of a system according to the invention which is coupled to a heat pump in the heating position;
Figure 14 is a diagram of the system shown in figure 13 in the cooling position;
Figure 15 shows an enthalpy diagram of the process taking place in the cooling position in the device according to figure 14;
Figure 16 shows a diagram of a system according to the invention which is coupled to an aquifer in the heating position;
Figure 17 is a diagram of the system shown in figure 16 in the cooling position;
Figure 18 is a diagram of the system shown in figure 17 with an extra heat exchanger;
Figure 19 shows a diagram of a system according to the invention which is coupled to a heat pump and an aquifer in the heating position; and
Figure 20 is a diagram of the system shown in figure 19 in the cooling position.

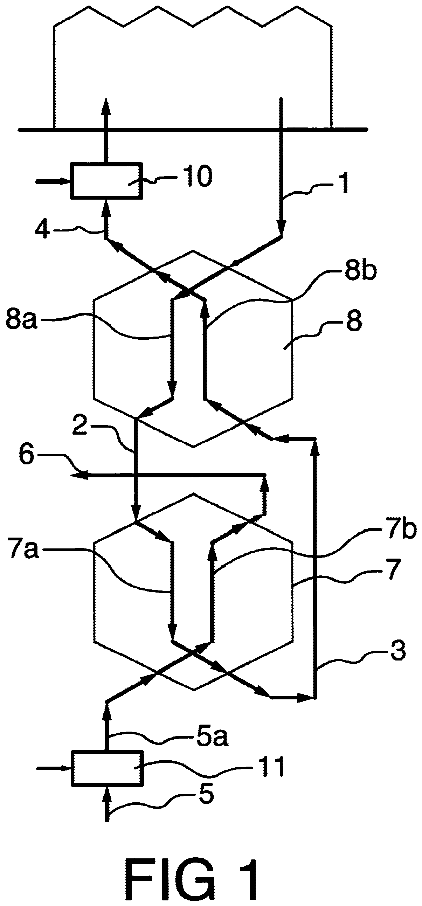

Figure 1 shows a simple diagram of the device according to the invention. The device comprises a first heat exchanger 7 embodied as an enthalpy recuperator. First heat exchanger 7 is provided with a first series of channels 7a and a second series of channels 7b coupled thermally thereto. The device also comprises a 'normal' heat exchanger 8, i.e. equipped only for exchanging sensible heat, which is provided with a first series of channels 8a and a second series of channels 8b coupled thermally thereto. The device further comprises a greenhouse supply connection 1 for supplying air originating from the greenhouse to the device, a greenhouse discharge connection 4 for discharging air from the device to the greenhouse, an outside supply connection 5 for supplying air originating from outside to the device, and an outside discharge connection 6 for discharging air from the device to the outside.

In the heating position the air coming from the greenhouse is guided from the greenhouse supply connection 1 to the first series of channels 8a of second 8 heat exchanger. This air is then guided from the point 2 thus reached to first series of channels 7a of first heat exchanger 7, after which point 3 is reached and the air is carried to greenhouse discharge connection 4 via the second series of channels 8b of second heat exchanger 8. The air coming from outside is guided from the outside supply connection 5 through the second series of channels 7b of first heat exchanger 7 and subsequently guided outside again via the outside discharge connection 6.

As it passes through the first series of channels 8a of second heat exchanger 8 the air coming from the greenhouse is cooled and condensed by the air flowing through the second series of channels 8b of the second heat exchanger. As it passes through the first series of channels 7a of the first heat exchanger the greenhouse air is further cooled and condensed from 2 to 3 by the preferably adiabatically cooled outside air passing through the second series of channels 7b of the first heat exchanger from 5 to 6. The greenhouse air is then heated again as it passes through 8b from 8 to 4 in the second heat exchanger, wherein use is made of the condensation heat during passage through 8a. By making use of the condensation heat the return temperature to the greenhouse has only decreased by a few percent, while the humidity has greatly decreased. Also shown in the drawing are humidifiers 10 and 11, which provide for the adiabatic humidification and cooling of the airflows. Fans can also be arranged at other locations in the relevant paths of respectively the greenhouse air and the outside air.

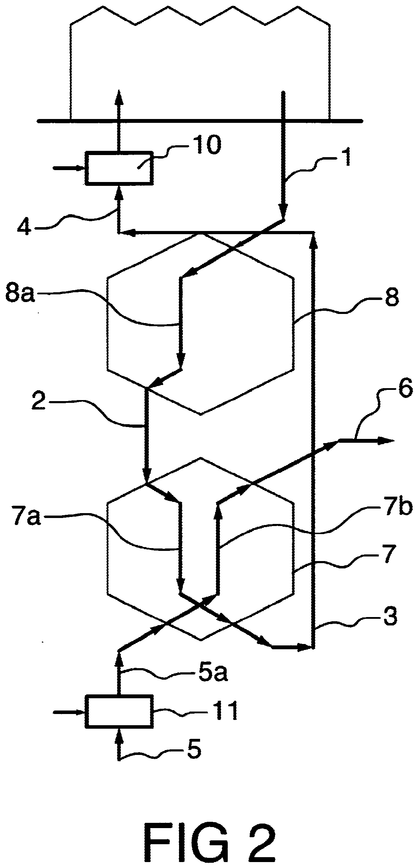

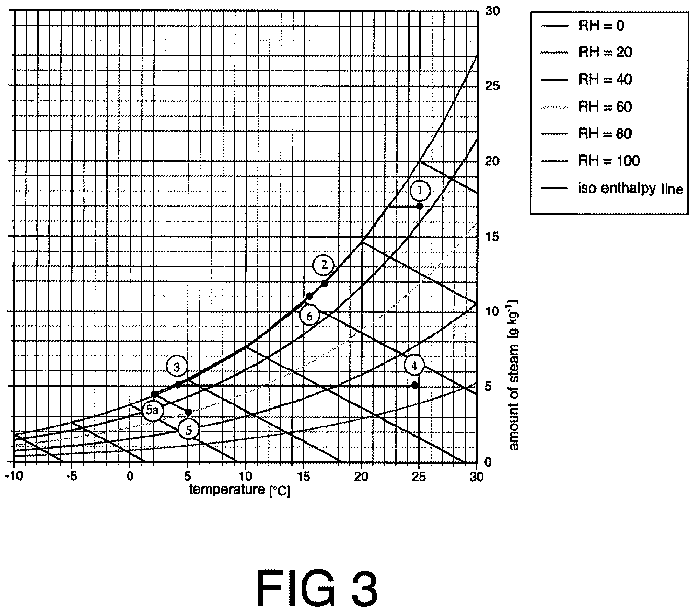

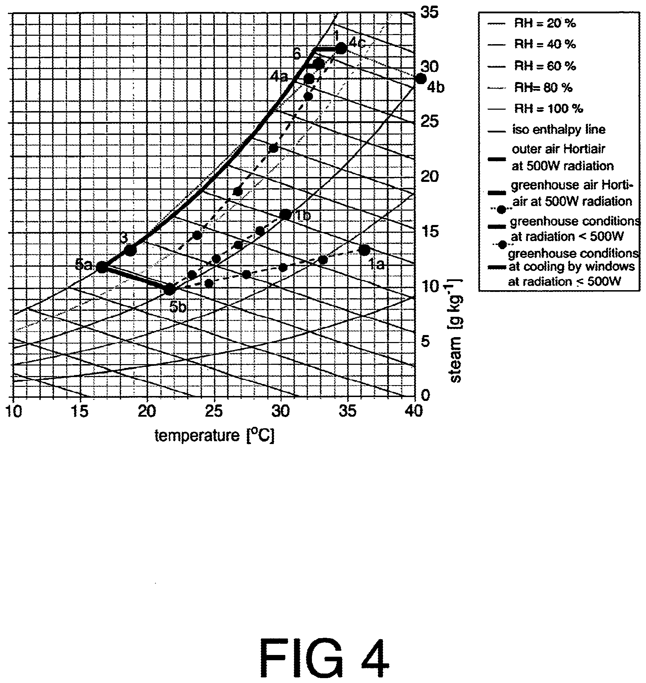

As shown in figure 2, during cooling operation not according to the invention both airflows follow a path largely corresponding to that of figure 1, with the proviso that the second series of channels 8b of second heat exchanger 8 is not passed through. Passage through the first series of channels 8a of second heat exchanger 8 hereby becomes pointless so that it is also, or alternatively, possible not to pass through the first series of channels 8a of second heat exchanger 8.
The thermodynamic operation of the invention is elucidated in an enthalpy diagram as shown in figures 3 and 4. Fig. 3 shows in an enthalpy diagram the situation for the heating position at different positions in the device for a regularly occurring combination of inside and outside temperature and relative humidity. The air coming from the greenhouse, the condition of which is designated with 1, is cooled and condensed and leaves the first series of channels 8a of second heat exchanger 8 in condition 2 (the numerals correspond to those of figures 1 and 2). In the first series of channels 7a of first heat exchanger 7 this air is further cooled and condensed to condition 3. The greenhouse air is then heated again in second channels 8b of second heat exchanger 8 to almost the same temperature at which it entered the device, but in a much drier state, after which the condition 4 is achieved. The greenhouse air can be heated to such an extent because use can be made of the condensation heat, so that the temperature effectiveness lies close to 100%. The outside air is first cooled adiabatically from condition 5 to condition 5a. The outside air then heats up in the first heat exchanger and evaporates the condensation formed by the greenhouse air, and leaves the recuperator in condition 6.

In the cooling position the psychrometry or the thermodynamic process takes place as shown in fig. 4. The attempt is made here to achieve control to a constant moisture deficit of 4 g/m³, as indicated by the broken blue line. The greenhouse air in condition 1 (the numbers correspond to fig. 2) is cooled in the first series of channels 7a of first heat exchanger 7 and condensed to condition 3. In the outgoing greenhouse air or in the greenhouse water is atomized and entrained to the greenhouse via greenhouse discharge connection 4. This air mixes with the greenhouse air and reaches condition 4a, while solar energy is supplied and condition 4b is reached, wherein the water can evaporate and condition 4c is reached. In reality these processes take place simultaneously, although for purposes of explanation they are shown here successively in time. Condition 4c coincides with the greenhouse air condition 1 after equilibrium has been reached. The outside air in condition 5 is cooled adiabatically to 5a. This air is heated in first heat exchanger 7, whereby the condensate formed by the greenhouse air evaporates and the air leaves the system in a condition 6. In this example the greenhouse air in condition 1 is the state of equilibrium at a gross irradiation of 500 Wm⁻². The other blue points are always 100 Wm⁻² less.
Given by way of comparison are the states of equilibrium of a greenhouse in which cooling takes place by opening the windows, this being curve through 1b for a tomato crop and curve through 1a for a crop which evaporates only half the moisture of that of the tomato. It can be seen that the equilibrium temperature in the greenhouse when the windows are opened is several degrees lower than in the case of a closed greenhouse and use of the invention when a strongly evaporating crop is applied, up to several degrees higher if a less evaporating crop is applied. The great difference between application of the invention in a closed greenhouse and the opening of windows is the humidity, or the moisture deficit, which amounts to more than 15 when windows are opened and thereby falls outside the range considered optimal for healthy growth.

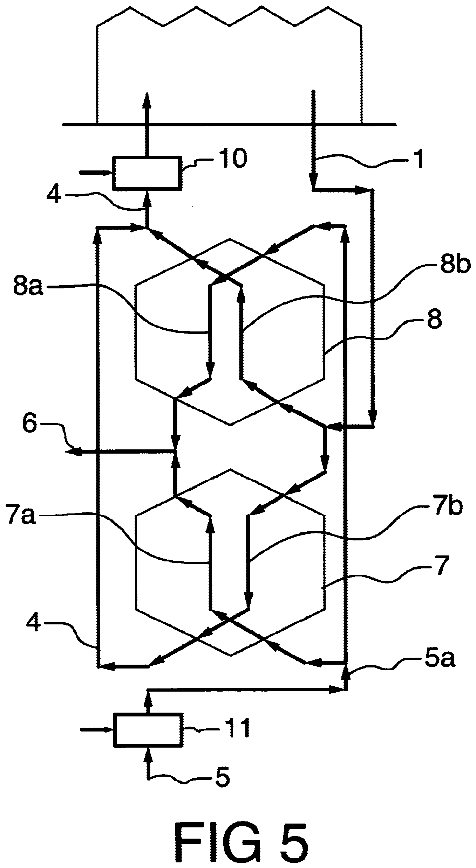

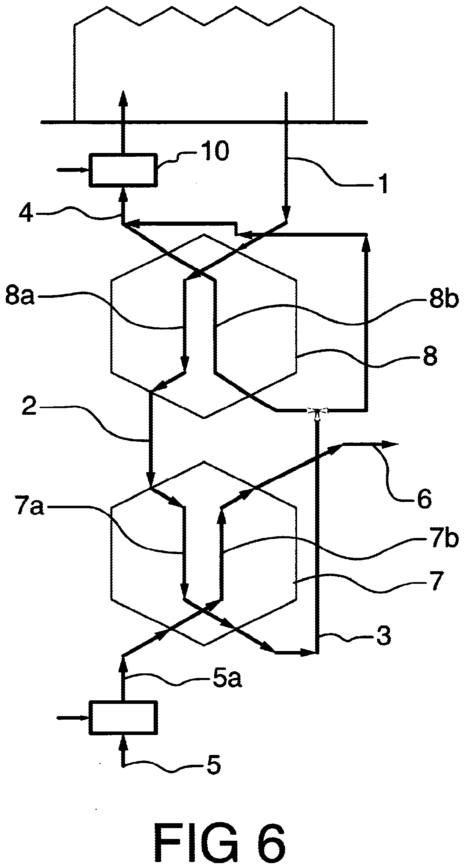

Alternative embodiments of the cooling situation not according to the invention will now be elucidated with reference to figures 5 and 6.

In the heating position at least two recuperators are required to remove moisture from the greenhouse, without admixing of outside air, during simultaneous recovery of the heat released during cooling of the greenhouse air to below the condensation point in order to achieve the desired dehumidification. In addition to heat, an enthalpy recuperator also recovers moisture. During heating operation deeper cooling can be achieved in the second condensation step with an enthalpy recuperator because the condensation heat can be discharged as evaporation heat in the cooling airflow, whereby more moisture is discharged from the greenhouse air. Despite severe frost outside, the enthalpy recuperator cannot freeze. During cooling operation the enthalpy recuperator transfers moisture from the greenhouse air to the cooling air, whereby deeper cooling of the greenhouse air is achieved and the cooling capacity increases considerably.

In the heating position an enthalpy recuperator serves no purpose in the first condensation step since it is not the intention to re-humidify the returning greenhouse air. In the cooling position as according to figure 2 the recuperator is not used, and an enthalpy recuperator therefore serves no purpose here.

In the cooling position the first recuperator can however be used if the diagram of figure 2 is extended with a number of plates so that flow through both recuperators takes place in parallel as shown in figure 5, whereby the flow resistance to both the greenhouse air and the outside (cooling) air decreases and the maximum flow, and thereby cooling capacity, increases using the same fan.

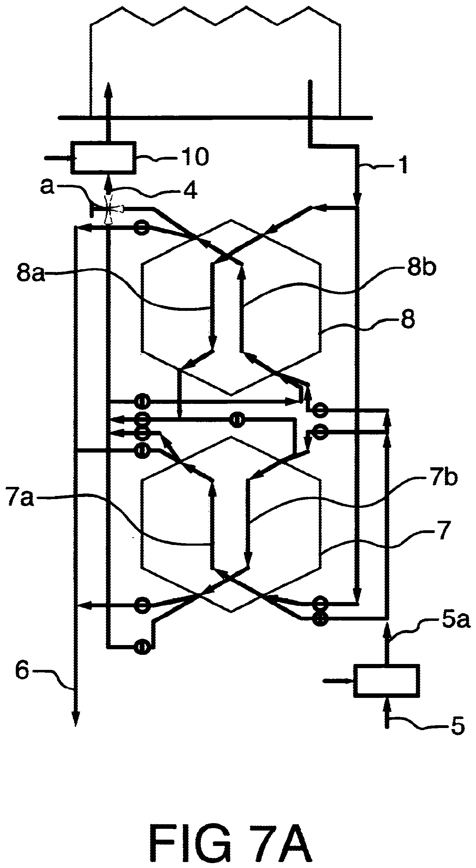

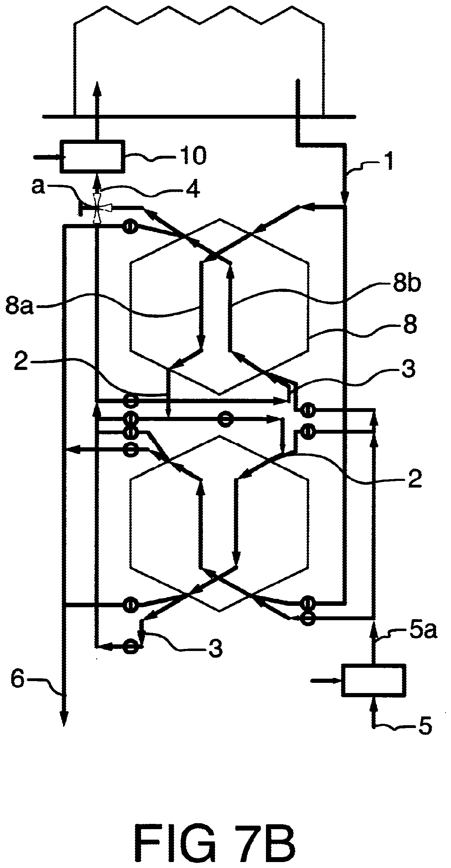

In this configuration it is possible to use no or one enthalpy recuperator (together with one recuperator for only sensible heat). If the enthalpy recuperator with plates is applied, both recuperators can also be enthalpy recuperators. In the heating position the switching time of the first enthalpy recuperator is then set to infinite, i.e. no switching takes place, so that the condensate runs out of the recuperator and is not transferred to the returning greenhouse air. In the cooling position the cooling capacity is greatly increased by the transfer of moisture from the greenhouse air to the outside (cooling) air. No condensation can however occur when a membrane recuperator is used. If the first recuperator is bypassed in the cooling position, a possible diagram will appear as in figure 6. This diagram requires only one three-way valve. If the recuperators are connected in parallel in the cooling position, the circuit diagram becomes considerably more complicated, as can be seen in figure 7.

The diagram enabling switching from the heating position to the cooling position requires a considerable number of two-way valves and a three-way valve (12 two-way valves and 1 three-way valve in this diagram). The number of two-way valves can be reduced by a good design of the path of the distribution channels in the casing. The three-way valve in figures 6 and 7 is modulating. A continuous transition from the heating position to the cooling position can hereby be achieved. This is only possible if the rest of the plates are in the heating position. Cooled greenhouse air 3 is then admixed with the reheated greenhouse air 4. As soon as the three-way valve has reached its final position, the other valves are placed in the cooling position.

A channel system with one or more plates is required in order to properly guide the flows of the greenhouse and the outside air through the two recuperators and to enable switching from heating to cooling operation. For practical and economic reasons channels and plates must be constructed in a casing which must result in the least possible flow loss at the lowest possible production price. The operating members, such as fans, humidifiers, pump, plate motors and control, can be integrated into this casing so that a compact, independently operating module results. Modules can then be assembled to form larger units or be distributed over the greenhouse. It will be apparent that the modules can also be connected in parallel in a large casing.

The casing serves, among other purposes, to enable leakage-free connection of the recuperators to the integrated distribution channels for the air, to accommodate the distribution channels with the least possible flow loss, to provide a topological solution for intersecting distribution channels, to accommodate the plates for switching from the heating to the cooling position, to enable the use of the fewest possible plates, to place the fans such that the efficiency is high, to collect and discharge the condensation water, to accommodate the humidification of both the outside air and the greenhouse air, to provide connection to the supply and discharge channels of the greenhouse and outside air, this such that, if the casings are stacked or placed in parallel, a simple configuration of a super header or manifold suffices to connect the connections, to enable stacking, placing in parallel and fixing of units in precisely aligned manner, to enable accommodation of the control electronics under the correct conditions, to enable easy mounting of the components and simple servicing of the system.

The plates must close well (total leakage < 0.5% nominal flow) and they may take up only little space. A solution is to embody them as slide plates, wherein at the end of the closing movement they are pressed at a right angle to this movement into a seal of the plate seat by using the form of the guide rail. In the open position the plates are parallel to the closed surfaces of the recuperators so that no extra space is taken up. Where possible, the plates are connected to a rod mechanism so that the fewest possible motors are necessary for the linear movement. The three-way valve can be embodied as rotating valve.

The distribution channels must on the one hand take up as little space as possible and on the other be of a size such that the flow resistance is small relative to that of the recuperators. By placing two separated channels on the side of the recuperator, wherein the two channels can be connected to an inflow or outflow opening of the recuperator, inflow and outflow openings of the recuperators can be connected to each other at random. In order to allow all permutations, as is necessary for the diagram with the parallel recuperators in the cooling position, two parallel channels must be arranged on both sides of the recuperators. The slide plates are then operated such that the desired inflow and outflow openings of the recuperators are mutually connected. This placing of the distributing channels prevents the distribution channels intersecting each other, whereby more space would be necessary for the distribution channels.

The casing is preferably made such that the recuperators are enclosed by two casing parts at a time, wherein the casing parts are closed substantially at right angles to sealing flanges. In this way the seals between flange and casing are only loaded in one direction during mounting, whereby a very good sealing can be realized and the mounting can also be carried out without positioning help. The casing parts are provided with a tongue and groove connection, which is embodied such that it has a clamping fit and is leakage-free. The mounting process is simplified by making this connection self-locating.

The casing parts preferably take a symmetrical form so that two casing components can be made with the same mould. The casing parts are preferably made such that the product can be removed from the mould in one direction so that no slides need be used. Applied for this purpose are closing parts which can fill the openings which are arranged for the purpose of symmetry but are not functionally necessary.

The slide plates are designed such that they can be mounted in the pulling direction of the casing parts by being pushed into the space recessed into the casing parts, wherein a good sealing is realized by cut edges. The casing is preferably made from a foamed plastic, whereby a good insulating value is achieved and a stable casing can be formed. Materials such as expanded polypropylene (EPP) are recommended here owing to their strength, insulating value, producibility, weight and price.

For the radial fans with backward curved blades which are the most suitable for this application, sufficient space is made round the blade wheel in order to thus achieve the highest possible fan efficiency.

At the inlet for the outside (cooling) air sufficient space is made to allow evaporation of a large part of the atomized water droplets, so that the air is cooled as far as possible adiabatically.

The casing is provided on both sides with a closing cover on which the fans, the electronics and the humidifiers are mounted. The covers and the casing parts are provided with a tongue and groove connection, as in the case of the casing parts. The outer side of the covers and the components of the channels of the manifolds or super headers are provided with a tongue and groove connection. These channel components are also provided with a tongue and groove connection. This creates a system in which the casing modules can be readily assembled to form a larger whole.

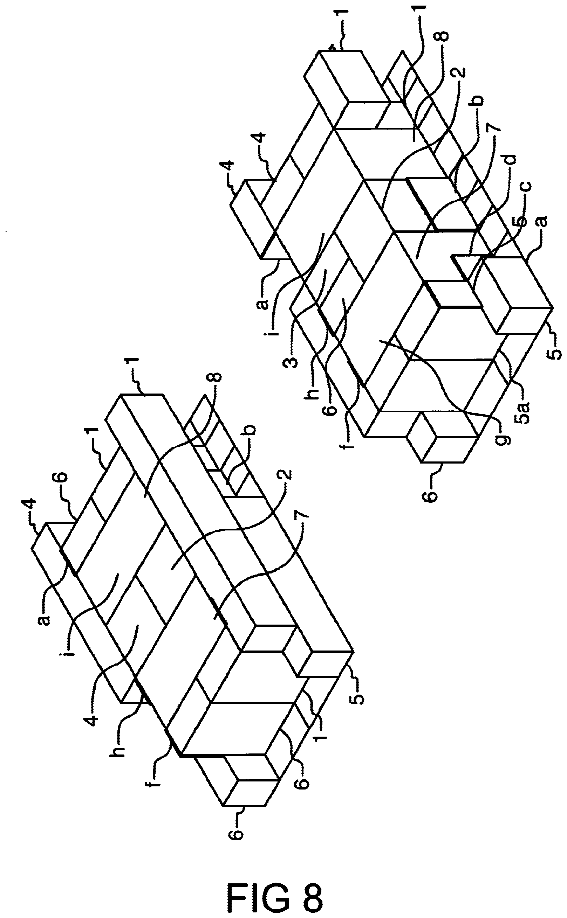

A preferably applied topology of the distribution channels and plates is elucidated with reference to figure 8. The basis is formed by a first and a second enthalpy recuperator 7 and 8, which are placed mutually in line. A discharge channel 6 for discharging outside air extends along a discharge side of both recuperators 7, 8. A discharge channel 4 for discharging greenhouse air extends parallel to discharge channel 6, likewise on the discharge side of both recuperators 7, 8. The two recuperators 7, 8 are mutually connected by connecting channels 2, 3. A supply channel 1 for supplying the outside air extends parallel to the discharge channels on the supply side of recuperators 7, 8. A supply channel 5 for supplying outside air likewise extends parallel to the other channels on the supply side of recuperators 7, 8. Plates b, c, d, e, f, g, h and I are also arranged, each between a recuperator 7, 8 and one of the respective channels 1, 4, 6, 7 and connecting channels 2, 3. These plates b, c, d, e, f, g, h and I are all slide plates. A valve a formed by a three-way valve is also arranged between channels 4 and 6 and recuperator 8.

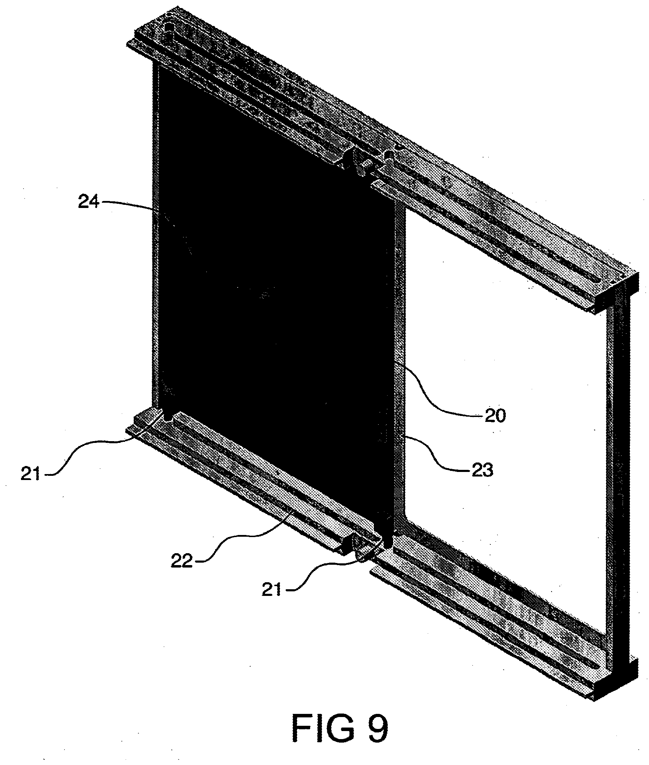

Plates b-I are preferably embodied as slide plates with a mechanism to close properly in the closed position, as shown in figure 9. Plate 20 runs with protrusions 21 in a guide track 22. Guide track 22 is placed such that plate 20 remains a short distance from plate frame 23 so that plate 20 can be moved reciprocally with very little friction. Just before the position where the plate must close the guide track runs toward the plate frame at an angle (∼45°). At the end of the plate movement plate 20 is pressed with its sealing O-ring (not shown in the drawing) against plate frame 23, thereby creating a good seal with negligible friction.

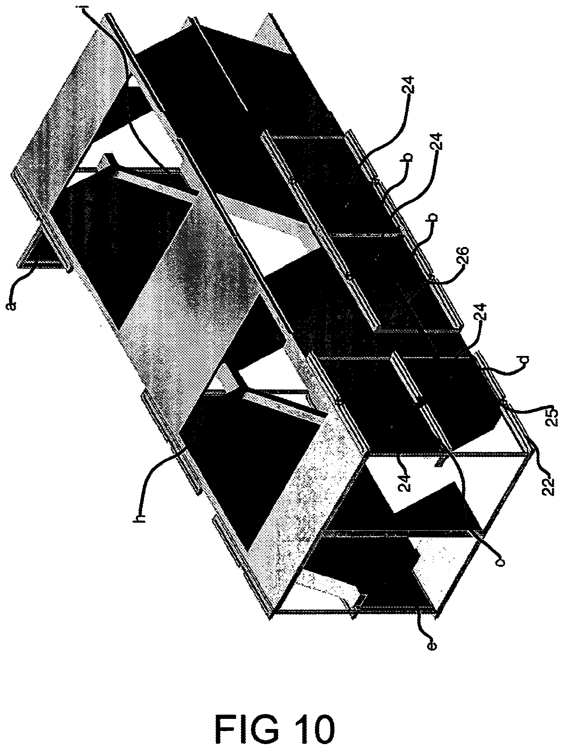

Plate 20 has in the centre a protrusion 24 to which can be attached a guide rod 25 and 26 which can be connected to another plate. A protrusion around which a guide rod can rotate is made at right angles to the guide rail. This guide rod is also connected to protrusions 24 of two plates 20 lying one above the other, as shown in figure 10.

As shown in figure 10, the inner casing is the part of the casing which connects directly to the recuperators and in which a part of the guide rail fits. The inner casing is drawn here separately of the rest of the outer casing to enable the operation of the plates to be better seen in the drawings. The recuperators are also omitted here for the sake of clarity. Plates 20 are moved by a spindle motor. The plates are here connected to each other by guide rods 25 and 26, thereby saving on a number of motors. Plate a is embodied as rotating plate and is also moved on a rotation point by a spindle motor. By choosing the pitch of the worm drive such that the spindle is self-locking, there remains tension on the plates and the sealing is pressed down well, whereby leakage will be minimal. The spindle motor of the rotating plate a is rotatable on a rod behind the plate frame. The plates can of course move and be driven in other manner, although with the described plate system only three motors are necessary for ten plates. Some of the ports in the inner casing are only made to enable symmetrical embodiment of the casing parts and make them removable from the mould, whereby only two moulds are necessary. They are closed by placing closing pieces 27 and 28 therein. A closing partition 29 can also be seen to the right of centre, which has also been omitted in the mould for reasons of symmetry.

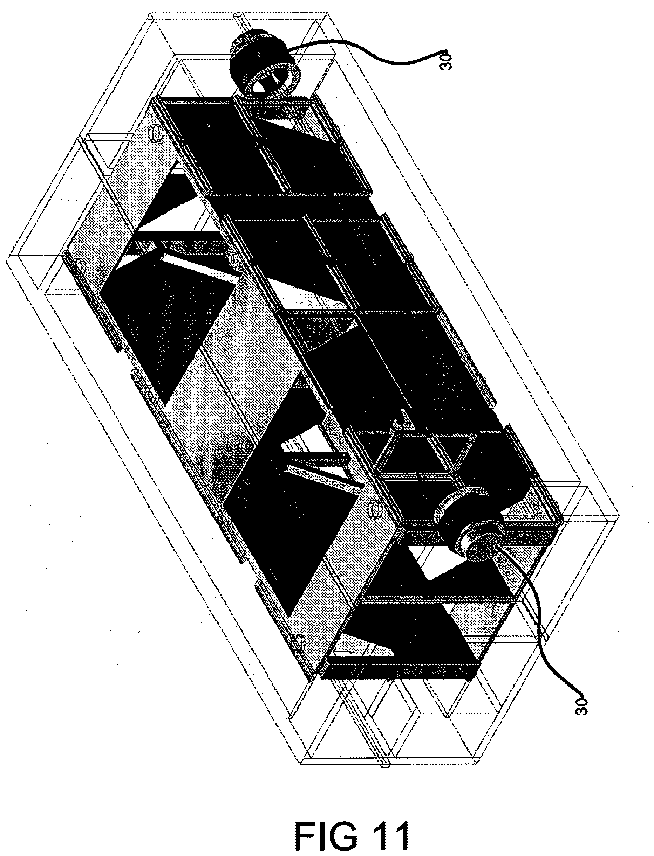

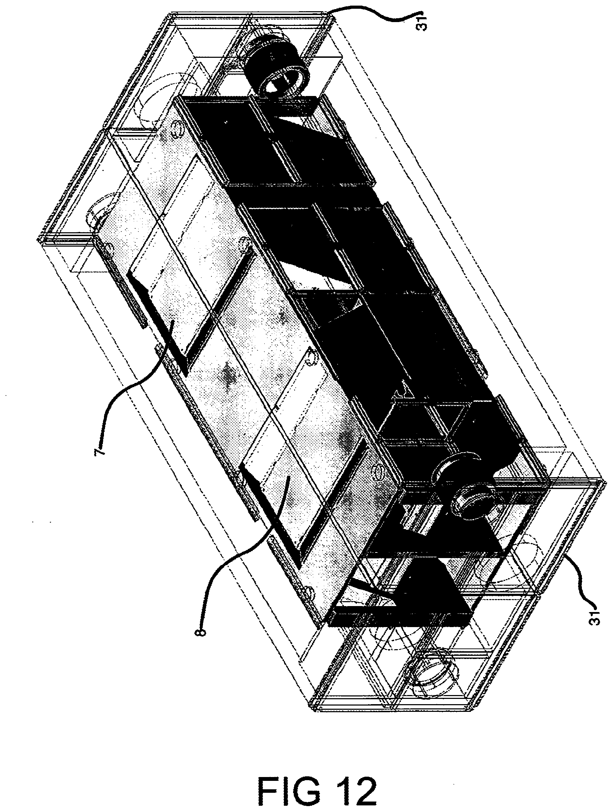

In fig. 11 the outer casing is added as line drawing so that the internal part is still visible. This drawing shows the inlet openings for the fans and the spaces in which the fans can be placed. Finally, end covers 31 are added as shown in figure 12.

The heating function is usually fulfilled by a pipe heating system in the greenhouse. The heat is supplied here by a boiler or a combined heat and power system. The heat can also be supplied by a heat pump, wherein the heat can then be extracted from the already heated outside air and the fresh outside (cooling) air, so that more dehumidification can also take place. The heat pump can then also be used to cool the outside (cooling) air in the cooling position and also to further cool the air to the greenhouse, while the heat is discharged with the heated outside air.

In the heating position heat is extracted from the already preheated and humidified outside air, wherein in addition to the sensible heat use is made of the condensation heat of the moisture transported out of the greenhouse. A high 'Coefficient Of Performance' (COP) can hereby be achieved.

In the cooling position the return air to the greenhouse is first cooled and the outside (cooling) air is then cooled with the heated medium. The recuperator hereby produces the maximum cooling by dehumidifying, and the greenhouse air is further cooled.

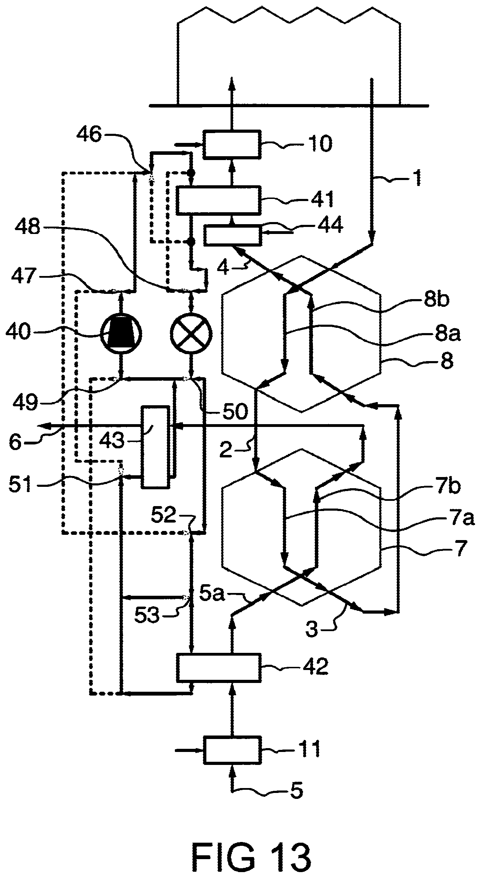

The arrangement of the heat exchangers of the heat pump differs from what is usual owing to the use of three heat exchangers instead of two, one of which is in the supply for the outside air. The purpose hereof is to allow the enthalpy recuperators to transfer more latent heat, whereby the system effectiveness is greatly improved. In the heating position the system is as shown in fig. 13.

The heat pump first relinquishes its heat to the dehumidified greenhouse air, wherein heat exchanger 41 is operated in counterflow. This is followed by expansion, and thereby cooling of the medium, whereby the outside air is first cooled in heat exchanger 42. This cooled outside air ensures that the greenhouse air is cooled more deeply, whereby more moisture is extracted from the greenhouse air. The heated medium is now heated further in heat exchanger 43 by the heated and humidified outside air. Use is hereby made of the condensation heat of the moisture occurring during the dehumidification of the greenhouse air. All heat exchangers of the heat pump are in counterflow with the air so that the maximum capacity of the heat exchangers is achieved. With a high heat-exchanging capacity of the exchangers the temperature of the exiting outside air approaches that of the entering air, and the power which is lost is only the difference between evaporation heat of the moisture in the outside air and the saturated outside air.

Increasing the outside airflow can prevent heat exchanger 42 freezing at low outside temperature by remaining just above the condensation point and freezing point. If the temperatures are well below freezing point, heat exchanger 42 can be bypassed and the heat is extracted only from the return outside air via heat exchanger 43, and the outside airflow is regulated such that no freezing occurs.

In the case of a high heating requirement and low moisture production too much dehumidification could take place. Using the humidifier of greenhouse air 10 the condition of the greenhouse air can then be regulated again to the correct value. It is then recommended to carry out the humidification before heat exchanger 41 with atomizer 44 so that the greenhouse air is first cooled adiabatically and is then heated by the water pump to a temperature lower than if the humidification takes place after heat exchanger 41. The COP of the heat pump will hereby increase. Another method of limiting dehumidification is to limit the outside airflow, whereby less dehumidification takes place. The heat pump will however then possibly receive too little air over heat exchanger 43, whereby the COP decreases and the power may possibly not be produced. Bypassing the outside air directly to heat exchanger 43 may be the remedy here, at the cost of an extra plate.

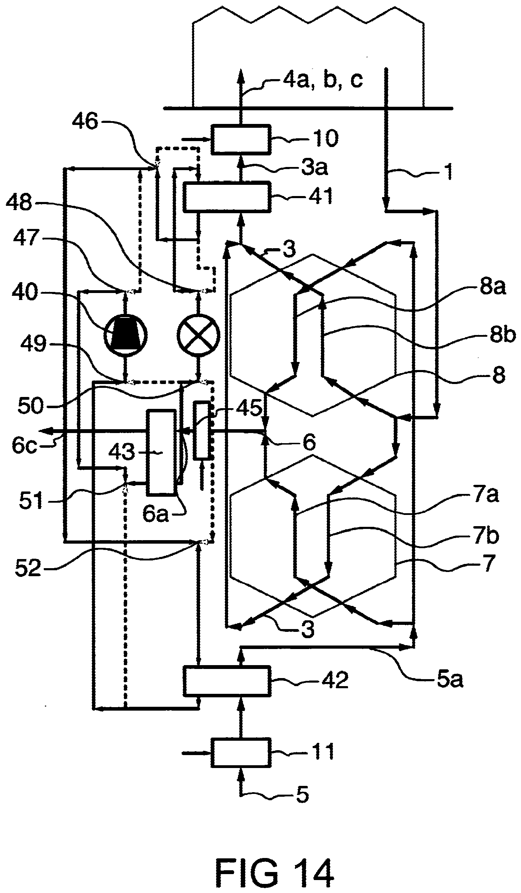

In the cooling position one four-way valve (drawn here as four three-way valves 47, 48, 49, 50) is replaced by the heat pump system and the plates in the greenhouse dehumidifying system are connected as shown in figure 14. It is also recommended to use plates 46, 51 and 52 to operate all heat exchangers in counterflow.

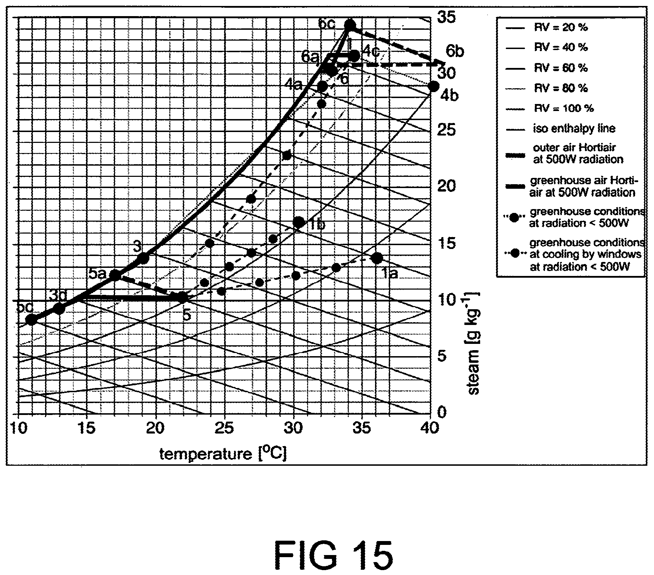

In heat exchanger 43 the heat pump first relinquishes heat to the heated and humidified outside air. After expansion and resulting cooling the cooled and dehumidified return greenhouse air is cooled in heat exchanger 41 in counterflow. The heated medium then cools the outside air in heat exchanger 42. The heat pump is only employed when adiabatic cooling 11 of the outside air no longer produces sufficient power to keep the greenhouse at the desired conditions. The adiabatic humidification 11 can be switched off when the wet bulb temperature of the outside air is reached by the heat pump. By cooling not only the return greenhouse air but also the outside air 5 the enthalpy recuperators can transfer the moisture from the greenhouse air over a greater temperature range to the outside air, and thereby realize a greater cooling capacity. Upon return to the greenhouse, the cooled and dehumidified greenhouse air is humidified to the point of oversaturation by atomizing water. This mist evaporates after mixing with the air in the greenhouse, thereby cooling the greenhouse. The attempt is preferably made here to achieve a constant moisture deficit. By atomizing water into the outgoing outside air 6 before the condenser of the heat pump using atomizer 45, this water evaporates in distributed manner over the condenser and provides for a much lower outlet temperature, and thereby for a lower temperature 6 of the heat pump medium, whereby the COP of the heat pump rises (from 6 to 6a by adiabatic cooling from 6a to 6b in figure 15).

The enthalpy diagram in figure 15 shows that the temperature of the heated outside air is first reduced to 6a by adiabatic cooling with atomizer 45. Heat is then supplied in heat exchanger 43 by the heat pump until condition 6b is achieved, after which adiabatic cooling takes place by evaporation of the oversaturated outside air 6a, and a condition 6c is achieved. The cooled greenhouse air 3 is further cooled in heat exchanger 41 by the heat pump to 3a, wherein the air is further dehumidified and condensation occurs in heat exchanger 41. Water is atomized in the casing or in the greenhouse. The air mixes with the greenhouse air, whereby (described here as individual steps for the sake of convenience) the temperature rises to 4a, after which the temperature rises to 4b through insolation, after which the temperature decreases through adiabatic evaporation until condition 4c is achieved, this being equal to the state of equilibrium of greenhouse air 1.

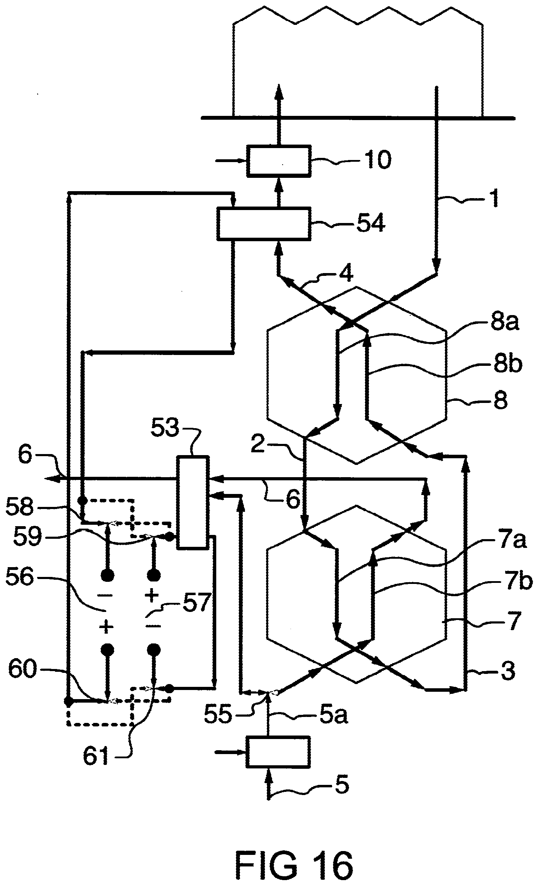

Long-term storage of heat and cold is a possible option for meeting the heating and cooling requirement. Storage in water-bearing layers, so-called aquifer storage, is the most obvious technical solution here. Aquifer storage is already being applied in a growing number of projects, wherein the object is to make the differences in temperature between warm and cold source as great as possible so that the heat exchangers for the transfer of the groundwater to the air (via a separating exchanger which is not shown) still have an economic size. Switching from the warm to the cold source takes place with plates 58, 59, 60 and 61. In the heating position the cold aquifer is charged from the outside air discharge in heat exchanger 53. This air 6 has already been heated in the second recuperator. The warm source supplies heat to a heat exchanger in the return greenhouse air 4 via heat exchanger 54. In order to lower the temperature of the cold source the adiabatically cooled outside air 5a can be used via a three-way valve 55, see fig. 16.

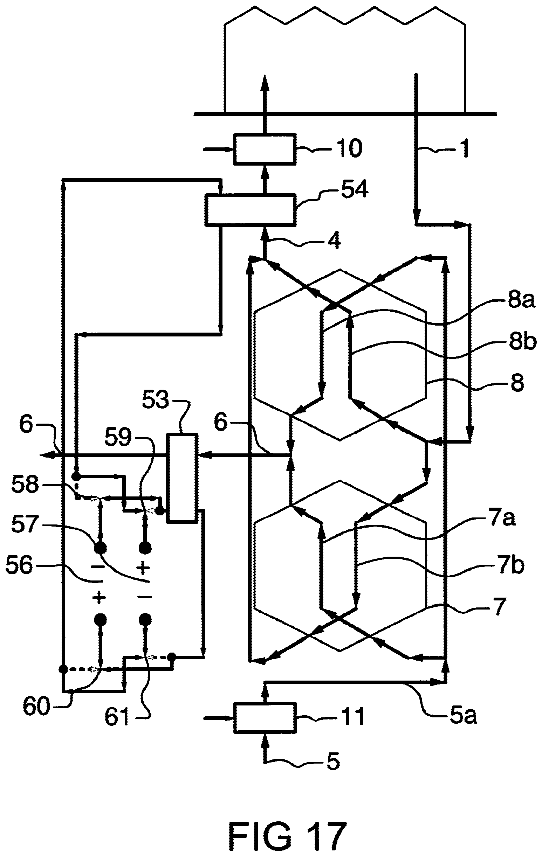

The system efficiency improves when all heat exchangers are operated in counterflow and the storage is thermally layered (cold below and warmer above). In the cooling position the heated outside air is used to heat the warm source 56. Cold source 57 is used to further cool the already cooled greenhouse air, see fig. 17.

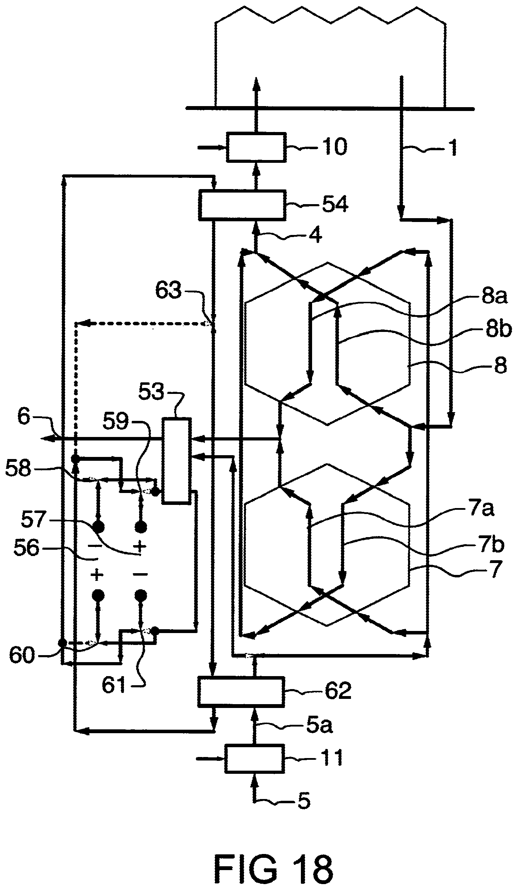

In order to enable better use to be made of the condensation heat in the discharge of outside air 6, a heat exchanger 62 and a three-way valve 63 can be added in the supply of the adiabatically cooled outside air 5a. This air is then cooled by the return water from the cold source after the heat exchanger of the return of greenhouse air 4. The feed temperature of the outside air hereby decreases, whereby more moisture is transferred to outside air 6 and more moisture can condense in the heat exchanger and the heating capacity to the warm source increases, see fig. 18.

The heat pump system and the aquifer can be combined, wherein the aquifer serves to store the heat or the cold still present in the discharge outside air for the other season and also to bring the inlet of the heat pump to a higher or lower temperature and hereby improve the COP of the heat pump.

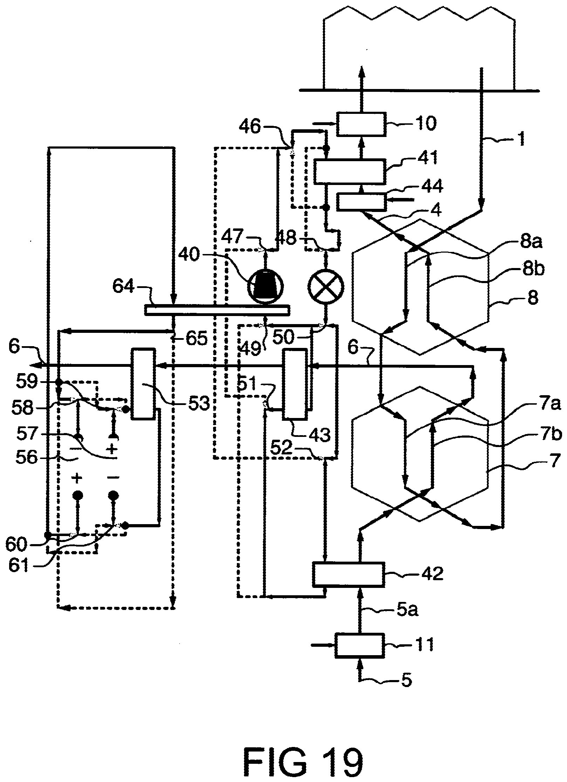

Fig. 19 shows the combination for the heating position (for the sake of simplicity the short-term heat and cold storage is not included in the diagram). The coupling between the aquifer and the heat pump system takes place via heat exchanger 64 and three-way valve 65.

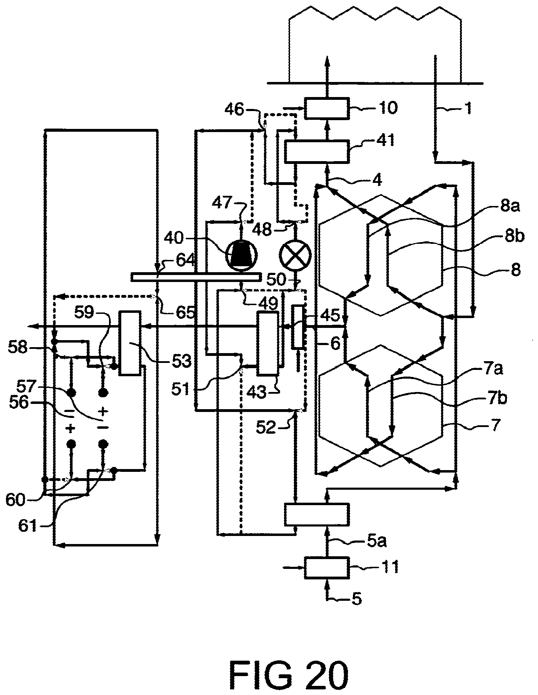

In this system it is possible that (depending on size, type of cultivation, climate etc.) no equilibrium is achieved and that every year the heat storage becomes warmer and the cold storage colder. The system can hereby be used as a heat and/or cold supplier, at least if there is a demand therefore in the immediate vicinity. Fig. 20 shows the combination for the cooling position.

The system becomes somewhat more complex due to the combination, but the effectiveness of the dehumidifying system and the heat pump system will increase due to the greater temperature differences over the enthalpy recuperators and the lower temperature differences over the heat pump, whereby the installation can be given a smaller and therefore less expensive form.

Combined heat and power generation is frequently used by larger companies. The advantages derive from inter alia the purchase subsidies, the good price for supplying to the mains at peak times and also supplying heat to third parties. CHP does not produce more real energy saving than the use of a part of the waste heat and the CO₂ from the flue gases. The conversion efficiency is lower than that of a modern power station. A considerable part of the heat cannot be used and must be dumped at considerable cost. The CO₂ cannot be used for all crops because of contaminants in the flue gases. In the case of disappointing feed-in tariff rates CHP cannot be operated economically, and the other advantages are hereby also lost. It is therefore a risky investment.

The HortiAir system is a real energy-saving system and therefore ensures the basic saving. The system provides for controllable dehumidification in all situations, whereby a desired moisture deficit can be obtained in a closed greenhouse. In addition to energy and cost saving, this results in additional production and higher quality, wherein considerably less CO₂ is required.

A combination of the HortiAir system and a CHP system, optionally with a heat pump and/or a long-term storage of heat and cold, results in a considerably smaller CHP system and much lower use of fossil energy. Although a CHP can ostensibly result in low energy costs per m² of greenhouse surface area, application of the HortiAir system in combination with a CHP results in lower costs and a better controllable greenhouse climate and higher yields. In many cases application of the HortiAir system without CHP will produce a better overall result. The choice must be made on the basis of a risk analysis, in which energy-saving always produces a positive result.

## Claims

1. Device for controlling the climate in a greenhouse, the device being adapted to take up a heating position in which the temperature of the greenhouse is increased or maintained, the device comprising:
- a first recuperator (7) with a first series of channels (7a) and a second series of channels (7b);
- a second recuperator (8), at least active in the heating position, with a third series of channels (8a) and a fourth series of channels (8b);
- - wherein the channels (7a, 7b, 8a, 8b) are adapted to mutually transfer thermal energy from fluids present in the channels;
- greenhouse supply means (1, 2) leading from the greenhouse to the first series of channels (7a);
- outside supply means (5) leading from the outside to the second series of channels (7b);
- greenhouse discharge means (3, 4) leading from the device to the greenhouse; and
- outside discharge means (6) leading from the device to the outside,
- - wherein the greenhouse discharge means (3, 4) connect to the first series of channels (7a) and the outside discharge means (6) connect to the second series of channels(7b),
**characterized in that** the device can take up a cooling position, in which the temperature of the greenhouse is reduced,
- that in the heating position the third series of channels (8a) of the second recuperator (8) is connected between the greenhouse supply means (1) and the first series of channels (7a) of the first recuperator and the fourth series of channels (8b) of the second recuperator (8) is connected between the first series of channels (7a) of the first recuperator and the greenhouse discharge means (4), and
- that in the cooling position fluid passes through only the fourth series of channels (8b) of the second recuperator (8) and that the third series of channels (8a) of the second recuperator (8) is bypassed.

2. Device as claimed in claim 1, **characterized in that** a three-way valve is received in the connection between the first series of channels (7a) of the first recuperator and the fourth series of channels (8b) of the second recuperator, or in the connection between the fourth series of channels (8b) of the second recuperator and the greenhouse discharge means (4).

3. Device as claimed in any of the preceding claims, **characterized in that** the first recuperator (7) is formed by an enthalpy recuperator which is adapted to periodically, repeatedly and simultaneously interchange the connections between the supply means (1, 5) and the first and second series of channels (7a, 7b) and the connections between the discharge means (4, 6) and the first and second series of channels (7a, 7b).

4. Device as claimed in any of the preceding claims, **characterized in that** the recuperators (7, 8) are each placed in a rectangular inner casing, that openings which can be closed by valves (16, 20) are arranged in the inner casing and that the openings are arranged in mutually opposite surfaces of the inner casing.

5. Device as claimed in claim 4, **characterized in that** the inner casing is placed in an outer casing and formed integrally therewith, and that the walls of the outer casing, on sides where the openings are made in the inner casing, extend further outward than the walls of the inner casing.

6. Device as claimed in claim 4 or 5, **characterized in that** the valves are provided with a closing plate movable substantially parallel to the closing plane.

7. Device as claimed in claim 6, **characterized in that** the valves are provided with four guides which are each movable pairwise in a groove arranged in a frame and extending substantially parallel to the direction of movement, that the grooves are provided with a part extending with a component parallel to the direction of movement of the plate and with a component extending toward the seal, and that the valves are adapted for operation by a rod mechanism movable parallel to the closing plane.

8. Device as claimed in any of the preceding claims, **characterized by** a heat pump provided with a compressor (40), an evaporator and at least a first and a second heat exchanger (41, 42), the first (41) of which is received between the first recuperator (7) and outside supply means, and the second (42) is received between the second recuperator (8) and the greenhouse discharge means (4).

9. Device as claimed in claim 8, **characterized in that** a third heat exchanger (43) is received between outside supply means (5) and the first recuperator (7).

10. Device as claimed in any of the preceding claims, **characterized by** a heat storage element such as an aquifer which is provided with at least a first and a second coupling heat exchanger, the first of which is placed between the first recuperator (7) and the outside supply means (5), and the second is placed between the second recuperator (8) and the greenhouse discharge means (4).

11. Device as claimed in claim 10, **characterized by** a third coupling heat exchanger (43) placed between the outside supply means (5) and the first recuperator (7).

12. Device as claimed in claim 10 or 11, **characterized by** a heat storage element such as an aquifer which is provided with at least a coupling heat exchanger which is coupled to the heat pump.

## Patentansprüche

1. Einrichtung zum Regulieren des Klimas in einem Gewächshaus, wobei die Einrichtung dazu ausgeführt ist, eine Heizposition einzunehmen, in der die Temperatur des Gewächshauses erhöht oder beibehalten wird, wobei die Einrichtung Folgendes umfasst:
- einen ersten Rekuperator (7) mit einer ersten Reihe von Kanälen (7a) und einer zweiten Reihe von Kanälen (7b);
- einen zweiten Rekuperator (8), der zumindest in der Heizposition eingeschaltet ist, mit einer dritten Reihe von Kanälen (8a) und einer vierten Reihe von Kanälen (8b);
- - wobei die Kanäle (7a, 7b, 8a, 8b) dazu ausgeführt sind, Wärmeenergie von in den Kanälen vorhandenen Fluiden wechselseitig zu übertragen;
- Gewächshauszuführmittel (1, 2), die vom Gewächshaus zur ersten Reihe von Kanälen (7a) führen;
- Außenzuführmittel (5), die von draußen zur zweiten Reihe von Kanälen (7b) führen;
- Gewächshausableitmittel (3, 4), die von der Einrichtung zum Gewächshaus führen; und
- Außenableitmittel (6), die von der Einrichtung nach draußen führen,
- - wobei die Gewächshausableitmittel (3, 4) mit der ersten Reihe von Kanälen (7a) verbunden sind und die Außenableitmittel (6) mit der zweiten Reihe von Kanälen (7b) verbunden sind,
**dadurch gekennzeichnet, dass** die Einrichtung eine Kühlposition einnehmen kann, in der die Temperatur des Gewächshauses verringert wird,
- dass in der Heizposition die dritte Reihe von Kanälen (8a) des zweiten Rekuperators (8) zwischen den Gewächshauszuführmitteln (1) und der ersten Reihe von Kanälen (7a) des ersten Rekuperators eingebunden ist und die vierte Reihe von Kanälen (8b) des zweiten Rekuperators (8) zwischen der ersten Reihe von Kanälen (7a) des ersten Rekuperators und den Gewächshausableitmitteln (4) eingebunden ist, und
- dass in der Kühlposition Fluid nur durch die vierte Reihe von Kanälen (8b) des zweiten Rekuperators (8) strömt und dass die dritte Reihe von Kanälen (8a) des zweiten Rekuperators (8) umgangen wird.

2. Einrichtung nach Anspruch 1, **dadurch gekennzeichnet, dass** ein Dreiwegeventil in der Verbindung zwischen der ersten Reihe von Kanälen (7a) des ersten Rekuperators und der vierten Reihe von Kanälen (8b) des zweiten Rekuperators oder in der Verbindung zwischen der vierten Reihe von Kanälen (8b) des zweiten Rekuperators und den Gewächshausableitmitteln (4) aufgenommen ist.

3. Einrichtung nach einem der vorhergehenden Ansprüche, **dadurch gekennzeichnet, dass** der erste Rekuperator (7) durch einen Enthalpierekuperator gebildet ist, der dazu ausgeführt ist, periodisch, wiederholt und gleichzeitig die Verbindungen zwischen den Zuführmitteln (1, 5) und der ersten und der zweiten Reihe von Kanälen (7a, 7b) und die Verbindungen zwischen den Ableitmitteln (4, 6) und der ersten und der zweiten Reihe von Kanälen (7a, 7b) zu tauschen.

4. Einrichtung nach einem der vorhergehenden Ansprüche, **dadurch gekennzeichnet, dass** die Rekuperatoren (7, 8) jeweils in einem rechteckigen Innengehäuse platziert sind, dass die Öffnungen, die durch Ventile (16, 20) verschlossen werden können, im Innengehäuse angeordnet sind und dass die Öffnungen in einander gegenüberliegenden Flächen des Innengehäuses angeordnet sind.

5. Einrichtung nach Anspruch 4, **dadurch gekennzeichnet, dass** das Innengehäuse in einem Außengehäuse platziert ist und einstückig damit ausgebildet ist und dass sich die Wände des Außengehäuses auf Seiten, wo die Öffnungen im Innengehäuse gefertigt sind, weiter nach außen erstrecken als die Wände des Innengehäuses.

6. Einrichtung nach Anspruch 4 oder 5, **dadurch gekennzeichnet, dass** die Ventile über eine Schließplatte verfügen, die im Wesentlichen parallel zur Schließebene beweglich ist.

7. Einrichtung nach Anspruch 6, **dadurch gekennzeichnet, dass** die Ventile über vier Führungen verfügen, die jeweils paarweise in einer Nut beweglich sind, die in einem Rahmen angeordnet ist und sich im Wesentlichen parallel zur Bewegungsrichtung erstreckt, dass die Nuten über einen Teil verfügen, der sich mit einer Komponente parallel zur Bewegungsrichtung der Platte und mit einer Komponente, die sich in Richtung der Dichtung erstreckt, erstreckt, und dass die Ventile für eine Betätigung durch einen Stangenmechanismus ausgeführt sind, der parallel zur Schließebene beweglich ist.

8. Einrichtung nach einem der vorhergehenden Ansprüche, **gekennzeichnet durch** eine Wärmepumpe, die über einen Verdichter (40), einen Verdampfer und einen ersten und einen zweiten Wärmetauscher (41, 42) verfügt, von denen der erste (41) zwischen dem ersten Rekuperator (7) und den Außenzuführmitteln aufgenommen ist und der zweite (42) zwischen dem zweiten Rekuperator (8) und den Gewächshausableitmitteln (4) aufgenommen ist.

9. Einrichtung nach Anspruch 8, **dadurch gekennzeichnet, dass** ein dritter Wärmetauscher (43) zwischen den Außenzuführmitteln (5) und dem ersten Rekuperator (7) aufgenommen ist.

10. Einrichtung nach einem der vorhergehenden Ansprüche, **gekennzeichnet durch** ein Wärmespeicherelement, wie etwa einen Aquifer, der über mindestens einen ersten und einen zweiten Kopplungswärmetauscher verfügt, von denen der erste zwischen dem ersten Rekuperator (7) und den Außenzuführmitteln (5) platziert ist und der zweite zwischen dem zweiten Rekuperator (8) und den Gewächshausableitmitteln (4) platziert ist.

11. Einrichtung nach Anspruch 10, **gekennzeichnet durch** einen dritten Kopplungswärmetauscher (43), der zwischen den Außenzuführmitteln (5) und dem ersten Rekuperator (7) platziert ist.

12. Einrichtung nach Anspruch 10 oder 11, **gekennzeichnet durch** ein Wärmespeicherelement, wie etwa einen Aquifer, der über mindestens einen Kopplungswärmetauscher verfügt, der mit der Wärmepumpe gekoppelt ist.

## Revendications

1. Dispositif de climatisation destiné à une serre, le dispositif étant conçu pour prendre une position de chauffage dans laquelle la température de la serre est augmentée ou maintenue, le dispositif comprenant :
un premier récupérateur (7) avec une première série de canaux (7a) et une deuxième série de canaux (7b) ;
un second récupérateur (8), au moins actif dans la position de chauffage, avec une troisième série de canaux (8a) et une quatrième série de canaux (8b) ;
les canaux (7a, 7b, 8a, 8b) étant conçus pour transférer mutuellement l'énergie thermique des fluides présents dans les canaux ;
un moyen d'alimentation de serre (1, 2) menant de la serre à la première série de canaux (7a) ;
un moyen d'alimentation extérieur (5) menant de l'extérieur à la deuxième série de canaux (7b) ;
un moyen de décharge de serre (3, 4) menant du dispositif à la serre ; et
un moyen de décharge extérieur (6) menant du dispositif vers l'extérieur,
le moyen de décharge de serre (3, 4) étant relié à la première série de canaux (7a) et le moyen de décharge extérieur (6) étant relié à la seconde série de canaux (7b),
**caractérisé en ce que** le dispositif peut prendre une position de refroidissement, dans laquelle la température de la serre est réduite,
**en ce que** dans la position de chauffage, la troisième série de canaux (8a) du second récupérateur (8) est reliée entre le moyen d'alimentation de serre (1) et la première série de canaux (7a) du premier récupérateur et la quatrième série de canaux (8b) du second récupérateur (8) est reliée entre la première série de canaux (7a) du premier récupérateur et le moyen de décharge de serre (4), et
**en ce que** dans la position de refroidissement, le fluide passe uniquement par la quatrième série de canaux (8b) du second récupérateur (8) et **en ce que** la troisième série de canaux (8a) du second récupérateur (8) est contournée.

2. Dispositif selon la revendication 1, **caractérisé en ce qu'**une vanne à trois voies est reçue dans la liaison entre la première série de canaux (7a) du premier récupérateur et la quatrième série de canaux (8b) du second récupérateur, ou dans la liaison entre la quatrième série de canaux (8b) du second récupérateur et le moyen de décharge de serre (4).

3. Dispositif selon l'une quelconque des revendications précédentes, **caractérisé en ce que** le premier récupérateur (7) est formé par un récupérateur enthalpique qui est conçu pour échanger de manière périodique, répétée et simultanée les liaisons entre le moyen d'alimentation (1, 5) et les première et deuxième séries de canaux (7a, 7b) et les liaisons entre le moyen de décharge (4, 6) et les première et deuxième séries de canaux (7a, 7b).

4. Dispositif selon l'une quelconque des revendications précédentes, **caractérisé en ce que** les récupérateurs (7, 8) sont placés chacun dans un boîtier interne rectangulaire, **en ce que** des ouvertures qui peuvent être fermées par des vannes (16, 20) sont pratiquées dans le boîtier interne et **en ce que** les ouvertures sont pratiquées dans des surfaces mutuellement opposées du boîtier interne.

5. Dispositif selon la revendication 4, **caractérisé en ce que** le boîtier interne est placé dans un boîtier externe et en fait intégralement partie, et **en ce que** les parois du boîtier externe, sur les côtés où les ouvertures sont pratiquées dans le boîtier interne, s'étendent plus vers l'extérieur que les parois du boîtier interne.

6. Dispositif selon la revendication 4 ou 5, **caractérisé en ce que** les vannes sont munies d'une plaque de fermeture mobile sensiblement parallèlement au plan de fermeture.

7. Dispositif selon la revendication 6, **caractérisé en ce que** les vannes sont munies de quatre guides qui sont chacun mobiles par paire dans une rainure disposée dans un cadre et s'étendant sensiblement parallèlement à la direction de déplacement, **en ce que** les rainures sont munies d'une partie s'étendant avec un composant parallèle à la direction de déplacement de la plaque et avec un composant s'étendant vers le joint et **en ce que** les vannes sont conçues pour être actionnées par un mécanisme à tige mobile parallèle au plan de fermeture.

8. Dispositif selon l'une quelconque des revendications précédentes, **caractérisé par** une pompe à chaleur munie d'un compresseur (40), d'un évaporateur et d'au moins un premier et un second échangeur de chaleur (41, 42), dont le premier (41) est reçu entre le premier récupérateur (7) et un moyen d'alimentation externe, et le second (42) est reçu entre le second récupérateur (8) et le moyen de décharge de serre (4).

9. Dispositif selon la revendication 8, **caractérisé en ce qu'**un troisième échangeur de chaleur (43) est reçu entre un moyen d'alimentation extérieur (5) et le premier récupérateur (7).

10. Dispositif selon l'une quelconque des revendications précédentes, **caractérisé par** un élément accumulateur de chaleur tel qu'un aquifère qui est muni d'au moins un premier et un deuxième échangeur de chaleur de couplage, dont le premier est placé entre le premier récupérateur (7) et le moyen d'alimentation extérieur (5), et le deuxième est placé entre le second récupérateur (8) et le moyen de décharge de serre (4).

11. Dispositif selon la revendication 10, **caractérisé par** un troisième échangeur de chaleur de couplage (43) placé entre le moyen d'alimentation extérieur (5) et le premier récupérateur (7).

12. Dispositif selon la revendication 10 ou 11, **caractérisé par** un élément accumulateur de chaleur tel qu'un aquifère qui est muni d'au moins un échangeur de chaleur de couplage qui est accouplé à la pompe à chaleur.
